# EUROPEAN PATENT SPECIFICATION

(11) **EP 2 451 328 B1**
(45) Date of publication and mention of the grant of the patent: **17.10.2012**
(21) Application number: 10740317.2
(22) Date of filing: 01.07.2010
(51) Int. Cl.: A47J 43/044, A47J 43/07, B01F 7/24, B01F 7/30

(54) **MIXING DEVICE**
MISCHVORRICHTUNG
DISPOSITIF DE MÉLANGE

(30) Priority: 07.07.2009 EP 09164767
(43) Date of publication of application: 16.05.2012
(73) Proprietor: Koninklijke Philips Electronics N.V., 5621 BA Eindhoven (NL)
(72) Inventor: FILIPITSCH, Harald, NL-5656 AE Eindhoven (NL); OBERSTEINER, Heimo, NL-5656 AE Eindhoven (NL)
(74) Representative: Coops, Peter
(86) International application number: PCT/IB2010/053016
(87) International publication number: WO 2011/004291

(56) References cited:
- DE-A1- 2 535 820
- GB-A- 544 650
- GB-A- 680 073
- US-A- 3 656 718
- US-A- 5 636 923
- US-A1- 2002 027 175

## Description

### FIELD OF THE INVENTION

The invention relates to the field of mixing devices, especially mixing devices used for household appliances like food processors, hand blenders and/or hand mixers.

### BACKGROUND OF THE INVENTION

US 3,656,718 describes an electrical domestic mixer for foods and ingredients of foods comprising a housing, beater means including a first and a second hollow shaft members supported in journaled relationship in said housing and extending downwardly from said housing, said shafts being substantially parallel, a helical blade member secured to each of said shafts and extending along the lower length thereof, said blade members having oppositely spiralled multicurved lands of substantially uniform radius disposed in interdigitating relationship and secured along their inner edges to their respective shafts, and driving means within said housing for rotating said shafts in opposite directions. The mixer described in US 3,656,718 is adapted to operate with highly viscous materials, particularly those which are kneaded without aeration. The helical blades interact with each other so as to perform a mixing or kneading function which drives the material vertically downwardly and upwardly depending on their relative locations with respect to the rotation of the drive shafts. Relating to the functionality of this electrical domestic mixer it is very difficult or even not possible to mix small quantities of foods and ingredients of foods.

### SUMMARY OF THE INVENTION

It is an object of the invention to provide a mixing device with which it is possible to even mix small quantities of mixable substances with good results.

The mixing device according to the invention for mixing mixable substances comprises aerating means with a rotational axis adapted to add air to the mixable substances and screw-shaped feeding means with a rotational axis adapted to transport mixable substances at least partly into the direction of the aerating means.

The mixing device is adapted to mix all possible mixable substances. Preferably the mixing device is adapted to mix mixable substances, like foods and ingredients of foods. In an operating mode the aerating means rotates around its rotational axis. The aerating means are formed as at least one beater, like a balloon beater, or a whisk. The aerating means mixes the mixable substances and adds air to the mixable substances, which is especially important by processing foods, like egg whites or cream. To increase the mixability of especially small quantities of mixable substances a screw-shaped feeding means is provided, which transport at least partly the mixable substances into the direction of the aerating means. Thus, the screw-shaped feeding means feeds the aerating means with the mixable substances. The screw-shaped feeding means provides very good conveying characteristics for mixable substances. The screw-shaped feeding means may easily lift up the mixable substances and may feed the mixing element with the lifted up mixable substances, which is essential for processing small quantities and additionally increases the beating effect of the mixing means while reducing the processing time. The screw-shaped feeding means lifts the mixable substances up and thru centrifugal forces the lifted mixable substances are transported towards the aerating means, which causes an additional volume increase of the actually mixed substances and better mixing results and thereby reduces the processing time. Thus, the mixable substances are transported by the screw-shaped feeding means vertically and horizontally relating to the rotational axis of the screw-shaped feeding means. In an operating mode the aerating means and the screw-shaped feeding means rotate around their rotational axis. The mixing means is arranged rotatable around the screw-shaped feeding means or the screw-shaped feeding means is arranged rotatable around the aerating means. Preferably, the aerating means is arranged rotatable around the rotational axis of the screw-shaped feeding means or the screw-shaped feeding means is arranged rotatable around the rotational axis of the aerating means. Thus, it is possible to provide three rotational movements in one mixing device within an operating mode, which allows better mixing results. Preferably, the screw-shaped feeding means and the aerating means rotate in the same direction. Furthermore, it is possible that the mixing device provides more than one aerating means and/or more than one screw-shaped feeding means. The screw-shaped feeding means and/or the aerating means may be made of any possible material, for example of a metal material, a plastic material, a glass material, a wood material and/or a ceramic material.

In a preferred embodiment of the invention, the rotational axis of the aerating means is arranged substantially parallel to the rotational axis of the screw-shaped feeding means. Preferably, the rotational axis of the aerating means corresponds to the longitudinal axis of the aerating means and the rotational axis of the screw-shaped feeding means corresponds to the longitudinal axis of the screw-shaped feeding means. Since the rotational axis of the aerating means is arranged substantially parallel to the rotational axis of the screw-shaped feeding means the transport of mixable substances by the screw-shaped feeding means into the direction of the aerating means has a high efficiency so that it is possible to achieve very good results by mixing small quantities of mixable substances.

According to another preferred embodiment of the invention the aerating means and/or the screw-shaped feeding means are driven by at least one drive unit. Preferably, both the aerating means and the screw-shaped feeding means are actively driven. It is possible that the aerating means and the screw-shaped feeding are separately driven, which means that the aerating means is provided with a drive unit and the screw-shaped feeding means is provided with a drive unit. This has the advantage that the aerating means and the screw-shaped feeding means are driven independently from each other. It is also possible, that only one drive unit is provided for both the aerating means and the screw-shaped feeding means so that the construction effort and the manufacturing costs of the device can be reduced. The drive unit is preferably a motor unit. But, it is also possible that the drive unit is hand driven preferably comprising a crank.

If only one drive unit is provided for both the aerating means and the screw-shaped feeding means it is preferred that the screw-shaped feeding means and the aerating means are coupled by transaction means. By providing transaction means only one drive unit is needed, which allows a reduction of costs of the mixing device.

Preferably, the transaction means is a gearing and/or a belt drive. The gearing may comprise at least two gear-wheels. Preferably, three gear-wheels are provided. At least one gear-wheel is connected with the rotational axis of the screw-shaped feeding means and at least one gear-wheel is connected with the rotational axis of the aerating means. For example, the screw-shaped feeding means is driven along its rotational axis by a drive unit, the rotation of the rotational axis of the screw-shaped feeding means is transmitted to the rotational axis of the aerating means by the gear-wheels, so that the aerating means is actively driven via the gearing. It is also possible to provide a belt drive, for example a tooth belt or a flat belt. Further it is possible to combine a gearing with a belt drive, for example using two gear-wheels which are connected by a belt drive. Using a gearing and/or a belt drive provides a simple implementation for transaction means.

Preferably, the aerating means is rotatable clockwise and counter-clockwise around the screw-shaped feeding means, especially around the rotational axis of the screw-shaped feeding means, or the screw-shaped feeding means is rotatable clockwise and counter-clockwise around the aerating means, especially around the rotational axis of the aerating means. Thus, the rotation direction of the screw-shaped feeding means around the rotational axis of the aerating means or the rotation direction of the aerating means around the rotational axis of the screw-shaped feeding means is changeable. Preferably, the change of the rotation direction depends on the properties, especially on the viscosity, of the mixable substances and/or the mixture. The change of the rotation direction may be preformed automatically without the interference of an user of the mixing device. This rotation direction change may simulate the natural behavior of a user whisking a medium or a mixable substance. During the operation mode or application of the mixing device the viscosity of the mixable substance and/or the mixture regulates the rotation direction and thereby adjusts itself to its optimum processing parameters.

Furthermore, it is preferred, that the rotation speed of the aerating means by rotating around the screw-shaped feeding means, especially around the rotational axis of the screw-shaped feeding means, or the rotation speed of the screw-shaped feeding means by rotating around the aerating means, especially around the rotational axis of the aerating means, is adjusted automatically by self regulating. Preferably, the rotation speed is self regulating depending from the characteristics, especially the friction and viscosity, of the mixable substances. For example, if the viscosity of the mixable substances and/or the mixture raises the rotation speed decreases especially the rotation speed decreases until the rotation direction of the screw-shaped feeding means rotatable around the aerating means changes or until the rotation direction of the aerating means rotatable around the screw-shaped feeding means changes. After a rotation direction change the rotation speed increases again. During application or during the operation mode of the mixing device the rotation speed is self regulated by the characteristics of the mixable substances and/or the mixture and thereby the mixing device adjusts itself to its optimum processing parameters of the mixable substances. The term self regulating means that the rotation speed adjusts itself without an interfering of the user of the mixing device. Thus, by the self regulated rotation speed, the rotation speed adjusts itself to the respective optimum rotation speed regarding the current characteristics of the mixable substances and/or the mixture. Hence, optimum mixing results are obtained.

In another preferred embodiment of the invention, the aerating means is connected with the screw-shaped feeding means by a rigid connecting element. The connecting element may be formed as a rectangular-shaped and or round-shaped bar, rod, profile or arm and the connecting element may be made of a metal or a plastic material. The connecting element may provide a constant distance between the screw-shaped feeding means and the aerating means and a precise guidance of the screw-shaped feeding means and the aerating means to each other. The connecting element may be fixed to the rotational axis of the screw-shaped feeding means and the rotational axis of the aerating means.

Preferably, the connecting element is arranged rotatable around the screw-shaped feeding means, especially around the rotational axis of the screw-shaped feeding means, or the connecting element is arranged rotatable around the aerating means, especially around the rotational axis of the aerating means. It is possible that the aerating means is in a fixed position with the connecting element, whereas the connecting element is fixed to the screw-shaped feeding means rotatable around the rotational axis of the screw-shaped feeding means. Thus, the aerating means is rotatable around the rotational axis of the screw-shaped feeding means via the connecting element. Furthermore, it is possible, that the screw-shaped feeding means is in a fixed position with the connecting element, whereas the connecting element is fixed to the aerating means rotatable around the rotational axis of the aerating means. Thus, the screw-shaped feeding means is rotatable around the rotational axis of the aerating means via the connecting element. The connecting element may provide a precise guidance of the rotatable screw-shaped feeding means or the rotatable aerating means. The connecting element is driven separately from the rotational movement of the screw-shaped feeding means around its rotational axis and from the rotational movement of the aerating means around its rotational axis. Preferably, the connecting element is driven by a motor unit to conduct a rotational movement.

According to a further embodiment of the invention, the screw-shaped feeding means is mounted along its rotational axis at at least two points. Preferably, the screw-shaped feeding means is mounted at one end along its rotational axis and at the opposite end of the one end along its rotational axis. By mounting the screw-shaped feeding means at two points, the feeding means may be centered in a predefined position. The screw-shaped feeding means is preferably mounted at at least one point of these two points by a pin.

Preferably, the screw-shaped feeding means comprises at least one screw flight, wherein the at least one screw flight comprises at least one section with a screw pitch of zero degrees. Providing the screw flight with at least one section with a screw pitch of zero degrees undercuts at the screw flight may be prevented. It is preferred, that the at least one screw flight provides more than one thread, wherein each thread provides at least one of the at least one section with a screw pitch of zero degrees. By providing each thread with at least one section with a screw pitch of zero degrees the screw-shaped feeding means may be demoulded during die cast production with a simple two-part tooling without the need of sliders. Thus, it is possible to use cheap die cast methods for a simple and a cheap production of the screw-shaped feeding means.

Preferably, each thread provides two sections of the at least one section with a screw pitch of zero degrees. The other sections than the at least one section with a screw pitch of zero degrees provide a screw pitch of more than zero degrees, especially a screw pitch between 30 and 50 degrees. Preferably, the at least one of the at least one section with a screw pitch of zero degrees is positioned at the same position for each thread so that these sections with a screw pitch of zero degrees are lined on top of each other.

The invention further relates to a screw with the embodiments as described above.

Another aspect of the invention is a food processor comprising a mixing device as described above. The food processor may comprise a bowl, where the mixable substances may be mixed with the mixing device.

### BRIEF DESCRIPTION OF THE DRAWINGS

These and other aspects of the invention will be apparent from and elucidated with reference to the embodiments described hereinafter.

In the drawings:
Fig. 1 is a schematic view of an embodiment of a mixing device according to the invention;
Fig. 2 is a schematic view of the mixing device shown in Fig. 1 being part of a food processor;
Fig. 3 is a schematic view of a first embodiment of the screw-shaped feeding means according to the invention;
Fig. 4 is another schematic of the first embodiment of the screw-shaped feeding means shown in Fig. 3;
Fig. 5 is a schematic view of a second embodiment of the screw-shaped feeding means according to the invention; and
Fig. 6 is another schematic view of the second embodiment of the screw-shaped feeding means shown in Fig. 5.

### DETAILED DESCRIPTION OF THE EMBODIMENTS

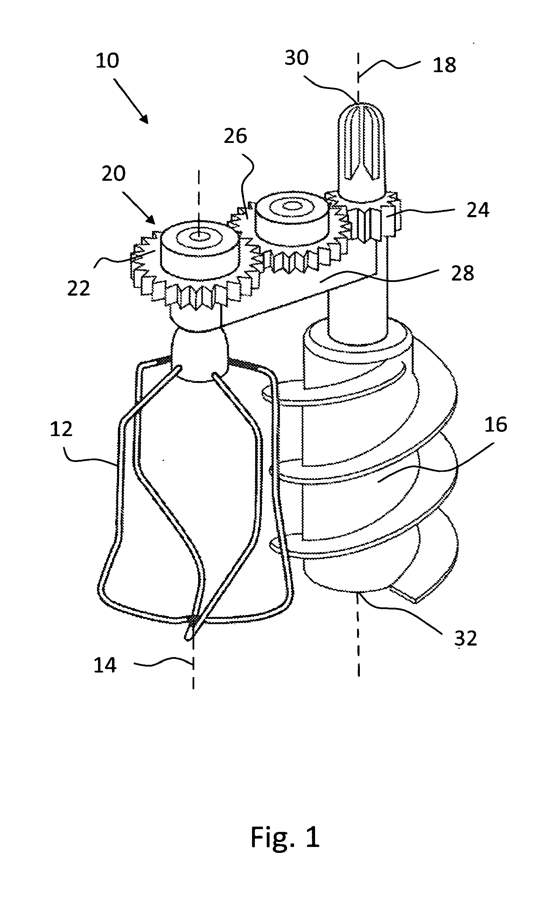

Fig. 1 shows a schematic view of an embodiment of a mixing device 10 according to the invention. The mixing device 10 comprises aerating means 12 with a rotational axis 14 and screw-shaped feeding means 16 with a rotational axis 18. The aerating means 12 is formed as a balloon beater. The aerating means 12 is positioned next to the screw-shaped feeding means 16, whereas the rotational axis 14 of the aerating means 12 is arranged parallel to the rotational axis 18 of the screw-shaped feeding means 16. The aerating means 12 and the screw-shaped feeding means 16 are actively driven, wherein the aerating means 12 and the screw-shaped feeding means 16 are coupled by transaction means, like a gearing 20. The gearing 20 comprises three gear-wheels 22, 24, 26, wherein a first gear-wheel 22 is positioned at the rotational axis 14 of the aerating means 12, a second gear-wheel 24 is positioned at the rotational axis 18 of the screw-shaped feeding means 16 and a third gear-wheel 26 is positioned between the first gear-wheel 22 and the second gear-wheel 24. Thus, in this embodiment it is sufficient to drive the screw-shaped feeding means 16 and the aerating means 12 by a drive unit (not shown), like a motor unit, via the rotational axis 18 of the screw-shaped feeding means 16. The aerating means 12 may rotate around its rotational axis 14 in the same direction as the screw-shaped feeding means 16 may rotate around its rotational axis 18. Further, it is possible that the aerating means 12 may rotate around its rotational axis 14 in a different direction as the screw-shaped feeding means 16 may rotate around its rotational axis 18. Preferably, the aerating means 12 and the screw-shaped feeding means 16 rotate clockwise.

The aerating means 12 and the screw-shaped feeding means 16 are connected by a rigid connecting element 28, formed like an arm. The connecting element 28 is free to rotate around the rotational axis 18 of the screw-shaped feeding means 16. The aerating means 12 is guided by the connecting element 28 to rotate around the rotational axis 18 of the screw-shaped feeding means 16. The connecting element 28 and thus the aerating means 12 are free in its rotation direction around the rotational axis 18 of the screw-shaped feeding means 16. The rotation direction changes between clockwise and counter-clockwise. Moreover, the rotation speed of the connecting element 28 and the aerating means 12 around the rotational axis 18 of the screw-shaped feeding means is adjusted automatically by self-regulating. The rotation speed and the rotation direction of the connecting element 28 and the aerating means 12 depend for example on the viscosity of the mixable substances. While the viscosity of the mixable substances raises the rotation speed decreases until the rotation direction of the connecting element 28 together with the aerating means 12 changes, for example a change from clockwise to counter-clockwise. After a change of the rotation direction the rotation speed increases again.

To center the screw-shaped feeding means 16 in a predefined position the screw-shaped feeding means 16 is mounted at two points 30, 32 along its rotational axis 18. One point 30 is at one end along the rotational axis 18 of the screw-shaped feeding means 16 and the other point 32 is at the opposite end of the one end along the rotational axis 18 of the screw-shaped feeding means 16. The feeding means 16 is preferably mounted at the point 32 at the opposite end along its rotational axis 18 by a pin. But, it is also possible that the screw-shaped feeding means 16 is mounted only at one point 30, 32 along its rotational axis 18, preferably at the point 30 in the area of the transaction means.

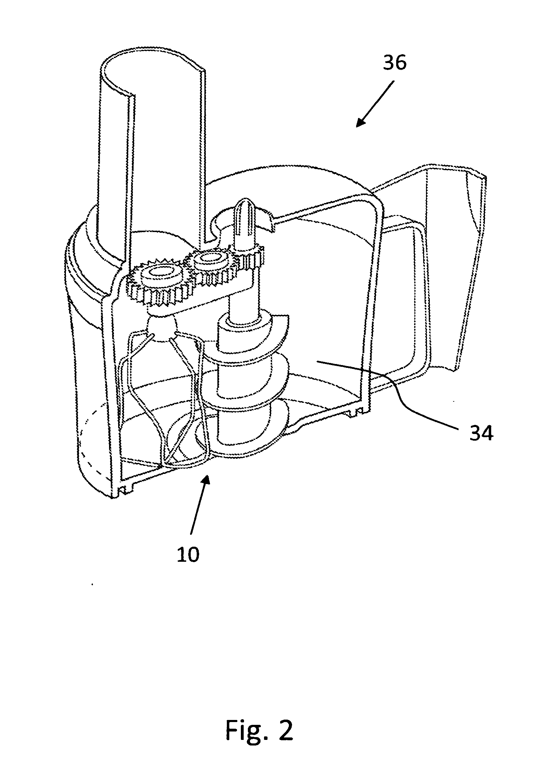

Fig. 2 shows the mixing device 10 positioned in a bowl 34 of a food processor 36.

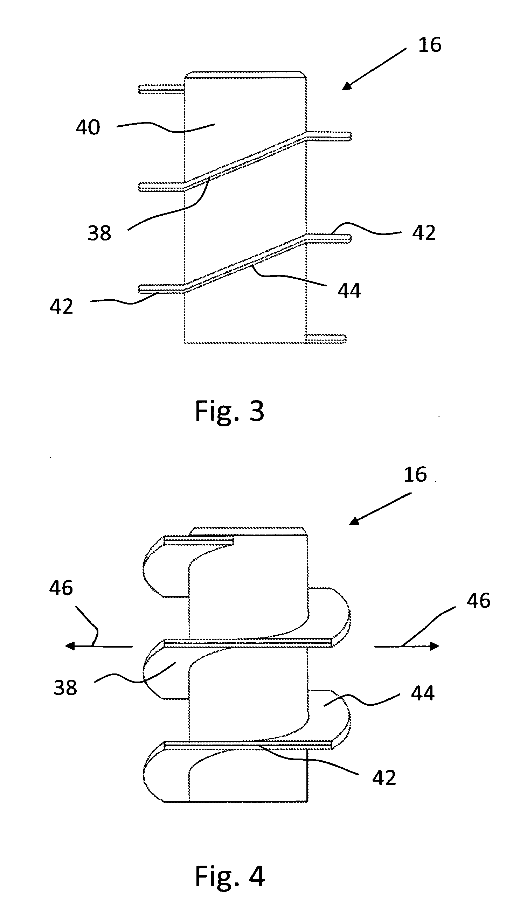

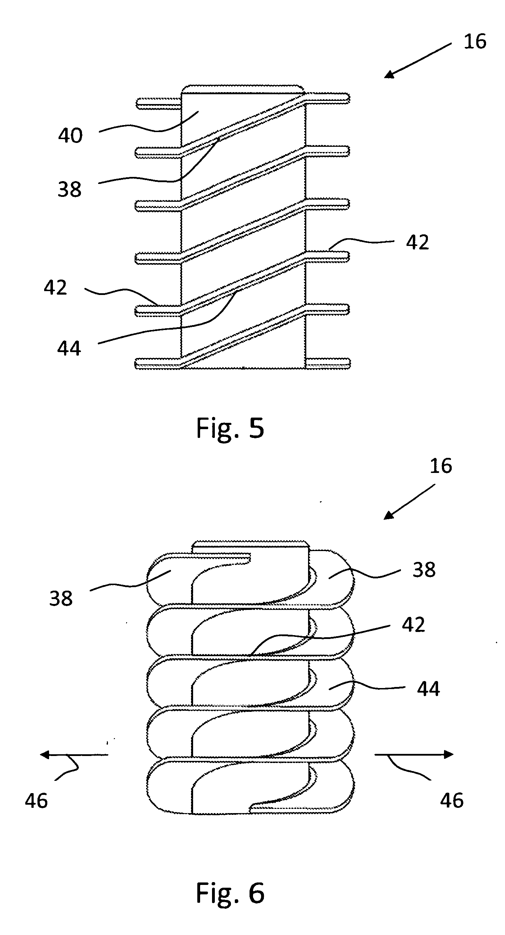

Fig. 3 and 4 show a possible first embodiment of the screw-shaped feeding means 16. The screw-shaped feeding means 16 comprises a screw flight 38, wherein the screw flight 38 provides more than one thread. One thread of the screw flight 38 extends 360 degrees around the body 40 of the screw-shaped feeding means 16. Each thread preferably provides four sections, wherein two sections 42 of these four sections provide a screw pitch of zero degrees. The other two sections 44 of these four sections provide a screw pitch of more than zero degrees, preferably a screw pitch between 30 and 50 degrees. As it can be seen in Fig. 5 and 6 the screw-shaped feeding means 16 may provide two screw flights 38, wherein each screw flight 38 provides more than one thread, wherein each thread preferably provides four sections, wherein two sections 42 provide a screw pitch of zero degrees. Using sections 42 with a screw pitch of zero degrees the screw-shaped feeding means 16 may be demoulded during die cast production, whereas the demouldable direction is shown by arrow 46 in Fig. 4, with a simple two-part tooling without the need of sliders. The at least one of the at least one section with a screw pitch of zero degrees is positioned at the same position for each thread so that these sections with a screw pitch of zero degrees are lined on top of each other, as it can be seen in Fig. 3 and 4.

While the invention has been illustrated and described in detail in the drawings and foregoing description, such illustration and description are to be considered illustrative or exemplary and not restrictive, the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A mixing device (10) for mixing mixable substances, comprising
- aerating means (12) with a rotational axis (14) adapted to add air to the mixable substances; and
- screw-shaped feeding means (16) with a rotational axis (18) adapted to transport the mixable substances at least partly into the direction of the aerating means (12) such that small quantities of mixable substances are mixed with good results, wherein aerating means (12) and the screw-shaped feeding means (16) are arranged to rotate around their rotational axes (14, 18), wherein the aerating means (12) comprise at least one beater, **characterized in that** the aerating means (12) is arranged rotatable around the screw-shaped feeding means (16) or the screw-shaped feeding means (16) is arranged rotatable around the aerating means (12).

2. Mixing device (10) according to claim 1, wherein the rotational axis (14) of the aerating means (12) substantially coincides with a longitudinal axis of the aerating means (12), and wherein the rotational axis (18) of the screw-shaped feeding means (16) substantially coincides with a longitudinal axis of the screw-shaped feeding means (16).

3. Mixing device (10) according to claim 1, wherein the rotational axis (14) of the aerating means (12) is arranged substantially parallel to the rotational axis (18) of the screw-shaped feeding means (16).

4. Mixing device (10) according to claim 1, wherein the aerating means (12) and/or the screw-shaped feeding means (16) are driven by at least one drive unit.

5. Mixing device (10) according to claim 1, wherein the aerating means (12) and the screw-shaped feeding means (16) are coupled by transaction means.

6. Mixing device (10) according to claim 4, wherein the transaction means is a gearing (20) and/or a belt drive.

7. Mixing device (10) according to claim 1, wherein the aerating means (12) is rotatable clockwise and counter-clockwise around the screw-shaped feeding means (16) or the screw-shaped feeding means (16) is rotatable clockwise and counter-clockwise around the aerating means (12).

8. Mixing device (10) according to claim 1, wherein the rotation speed of the aerating means (12) by rotating around the screw-shaped feeding means (16) or the rotation speed of the screw-shaped feeding means (16) by rotating around the aerating means (12) is adjusted automatically by self-regulating.

9. Mixing device (10) according to claim 1, wherein the aerating means (12) is connected with the screw-shaped feeding means (16) by a rigid connecting element (28).

10. Mixing device (10) according to claim 9, wherein the connecting element (28) is arranged rotatable around the screw-shaped feeding means (16) or the connecting element (28) is arranged rotatable around the aerating means (12).

11. Mixing device (10) according to claim 1, wherein the screw-shaped feeding means (16) is mounted along its rotational axis (18) at at least two points (30, 32).

12. Mixing device (10) according to claim 1, wherein the screw-shaped feeding means (16) comprises at least one screw flight (38), wherein the at least one screw flight (38) comprises at least one section (42) with a screw pitch of zero degrees.

13. Mixing device (10) according to claim 12, wherein the at least one screw flight (38) provides more than one thread, wherein each thread provides at least one of the at least one section (42) with a screw pitch of zero degrees.

14. Food processor (36) comprising a mixing device (10) according to claim 1.

## Patentansprüche

1. Mischvorrichtung (10) zum Mischen mischbarer Substanzen, wobei diese Vorrichtung Folgendes umfasst:
- Belüftungsmittel (12) mit einer Drehachse (14), vorgesehen zum Zuführen von Luft zu den mischbaren Substanzen; und
- schraubenförmige Zufuhrmittel (16) mit einer Drehachse (18), vorgesehen zum Transportieren der mischbaren Substanzen wenigstens teilweise in Richtung der Belüftungsmittel (12), so dass geringe Mengen michbarer Substanzen erfolgreich gemischt werden, wobei Belüftungsmittel (12) und die schraubenförmigen Zufuhrmittel (16) zum Drehen um ihre jeweilige Drehachse (14, 18) vorgesehen sind, wobei die Belüftungsmittel (12) wenigstens einen Quirl aufweisen, **dadurch gekennzeichnet, dass** das Belüftungsmittel (12) drehbar um das schraubenförmige Zufuhrmittel (16) vorgesehen ist, oder dass das schraubenförmige Zufuhrmittel drehbar um das Belüftungsmittel (12) vorgesehen ist.

2. Mischvorrichtung (10) nach Anspruch 1, wobei die Drehachse (14) des Belüftungsmittels (12) im Wesentlichen mit einer Längsachse des Belüftungsmittels (12) zusammenfällt, und wobei die Drehachse (18) des schraubenförmigen Zufuhrmittels (16) im Wesentlichen mit einer Längsachse des schraubenförmigen Zufuhrmittels (16) zusammenfällt.

3. Mischvorrichtung (10) nach Anspruch 1, wobei die Drehachse (14) des Belüftungsmittels (12) im Wesentlichen parallel zu der Drehachse (18) des schraubenförmigen Zufuhrmittels (16) vorgesehen ist.

4. Mischvorrichtung (10) nach Anspruch 1, wobei das Belüftungsmittel und/oder das schraubenförmige Zufuhrmittel (16) von wenigstens einer Antriebseinheit angetrieben werden.

5. Mischvorrichtung (10) nach Anspruch 1, wobei das Belüftungsmittel (12) und das schraubenförmige Zufuhrmittel (16) durch Transaktionsmittel miteinander gekuppelt sind.

6. Mischvorrichtung (10) nach Anspruch 4, wobei das Transaktionsmittel ein Rädergetriebe (20) und/oder ein Riemenantrieb ist.

7. Mischvorrichtung (10) nach Anspruch 1, wobei das Belüftungsmittel (12) im Uhrzeigersinn und im Uhrzeigergegensinn um das schraubenförmige Zufuhrmittel (16) drehbar ist, oder das schraubenförmige Zufuhrmittel (16) im Uhrzeigersinn und im Uhrzeigergegensinn um das Belüftungsmittel (12) drehbar ist.

8. Mischvorrichtung (10) nach Anspruch 1, wobei die Drehgeschwindigkeit des Belüftungsmittels (12) durch Drehung um das schraubenförmige Zufuhrmittel (16) oder die Drehgeschwindigkeit des schraubenförmigen Zufuhrmittels (16) durch Drehung um das Belüftungsmittel (12) durch Selbstregelung automatisch eingestellt wird.

9. Mischvorrichtung (10) nach Anspruch 1, wobei das Belüftungsmittel (12) durch ein starres Verbindungselement (28) mit dem schraubenförmigen Zufuhrmittel (16) verbunden ist.

10. Mischvorrichtung (10) nach Anspruch 9, wobei das Verbindungselement (28) um das schraubenförmige Zufuhrelement (16) drehbar vorgesehen ist oder das Verbindungselement (18) um das Belüftungsmittel drehbar vorgesehen ist.

11. Mischvorrichtung (10) nach Anspruch 1, wobei das schraubenförmige Zufuhrmittel (16) an wenigstens zwei Stellen (30, 32) längs seiner Drehachse (18) angeordnet ist.

12. Mischvorrichtung (10) nach Anspruch 1, wobei das schraubenförmige Zufuhrmittel (16) wenigstens einen Schneckenförderer (38) aufweist, wobei der wenigstens eine Schneckenförderer (38) wenigstens einen Teil (42) mit einer Gewindesteigung gleich Null Grad aufweist.

13. Mischvorrichtung (10) nach Anspruch 12, wobei der wenigstens eine Schneckenförderer (38) mehr als einen Gewindegang aufweist, wobei jeder Gewindegang wenigstens einen Teil (42) mit einer Gewindesteigung gleich Null Grad aufweist.

14. Küchenmaschine (36) mit einer Mischvorrichtung (10) nach Anspruch 1.

## Revendications

1. Dispositif de mélange (10) pour mélanger des substances miscibles, comprenant :
- des moyens d'aération (12) avec un axe de rotation (14) qui sont adaptés de manière à ajouter de l'air aux substances miscibles ; et
- des moyens d'alimentation en forme de vis (16) avec un axe de rotation (18) qui sont adaptés de manière à transporter les substances miscibles au moins en partie dans la direction des moyens d'aération (12) de telle façon que de petites quantités de substances miscibles soient mélangées avec de bons résultats, dans lequel les moyens d'aération (12) et les moyens d'alimentation en forme de vis (16) sont agencés de manière à tourner autour de leurs axes de rotation (14, 18), et dans lequel les moyens d'aération (12) comprennent au moins une batte, **caractérisé en ce que** les moyens d'aération (12) sont agencés de façon rotative autour des moyens d'alimentation en forme de vis (16) ou **en ce que** les moyens d'alimentation en forme de vis (16) sont agencés de façon rotative autour des moyens d'aération (12).

2. Dispositif de mélange (10) selon la revendication 1, dans lequel l'axe de rotation (14) des moyens d'aération (12) coïncide sensiblement avec un axe longitudinal des moyens d'aération (12) et dans lequel l'axe de rotation (18) des moyens d'alimentation en forme de vis (16) coïncide sensiblement avec un axe longitudinal des moyens d'alimentation en forme de vis (16).

3. Dispositif de mélange (10) selon la revendication 1, dans lequel l'axe de rotation (14) des moyens d'aération (12) est agencé sensiblement en parallèle à l'axe de rotation (18) des moyens d'alimentation en forme de vis (16).

4. Dispositif de mélange (10) selon la revendication 1, dans lequel les moyens d'aération (12) et/ou les moyens d'alimentation en forme de vis (16) sont entraînés par au moins une unité d'entraînement.

5. Dispositif de mélange (10) selon la revendication 1, dans lequel les moyens d'aération (12) et les moyens d'alimentation en forme de vis (16) sont couplés par des moyens de transaction.

6. Dispositif de mélange (10) selon la revendication 4, dans lequel les moyens de transaction constituent un engrenage (20) et/ou un entraînement par courroie.

7. Dispositif de mélange (10) selon la revendication 1, dans lequel les moyens d'aération (12) sont rotatifs dans le sens des aiguilles d'une montre et dans le sens contraire des aiguilles d'une montre autour des moyens d'alimentation en forme de vis (16) ou dans lequel les moyens d'alimentation en forme de vis (16) sont rotatifs dans le sens des aiguilles d'une montre et dans le sens contraire des aiguilles d'une montre autour des moyens d'aération (12).

8. Dispositif de mélange (10) selon la revendication 1, dans lequel la vitesse de rotation des moyens d'aération (12) par rotation autour des moyens d'alimentation en forme de vis (16) ou dans lequel la vitesse de rotation des moyens d'alimentation en forme de vis (16) par rotation autour des moyens d'aération (12) est réglée automatiquement par autorégulation.

9. Dispositif de mélange (10) selon la revendication 1, dans lequel les moyens d'aération (12) sont reliés aux moyens d'alimentation en forme de vis (16) par un élément de connexion rigide (28).

10. Dispositif de mélange (10) selon la revendication 9, dans lequel l'élément de connexion (28) est agencé de façon rotative autour des moyens d'alimentation en forme de vis (16) ou dans lequel l'élément de connexion (28) est agencé de façon rotative autour des moyens d'aération (12).

11. Dispositif de mélange (10) selon la revendication 1, dans lequel les moyens d'alimentation en forme de vis (16) sont montés le long de leur axe de rotation (18) à l'endroit d'au moins deux points (30, 32).

12. Dispositif de mélange (10) selon la revendication 1, dans lequel les moyens d'alimentation en forme de vis (16) comprennent au moins une spire de vis (38) où l'au moins une spire de vis (38) comprend au moins une section (42) avec un pas de vis de zéro degrés.

13. Dispositif de mélange (10) selon la revendication 12, dans lequel l'au moins une spire de vis (38) fournit plus d'un filet où chaque filet fournit au moins une de l'au moins une section (42) avec un pas de vis de zéro degrés.

14. Robot de cuisine (36) comprenant un dispositif de mélange (10) selon la revendication 1.
